# EUROPÄISCHE PATENTSCHRIFT

(11) **EP 0 805 082 B1**
(45) Veröffentlichungstag und Bekanntmachung des Hinweises auf die Patenterteilung: **12.09.2001**
(21) Anmeldenummer: 97104234.6
(22) Anmeldetag: 13.03.1997
(51) Int. Cl.: B60T 7/20

(54) **Zugeinrichtung für Fahrzeuganhänger**
Traction device for a trailer
Dispositif de traction pour remorque

(30) Priorität: 29.04.1996 DE 19617064
(43) Veröffentlichungstag der Anmeldung: 05.11.1997
(73) Patentinhaber: BPW Bergische Achsen Kommanditgesellschaft, 51674 Wiehl (DE)
(72) Erfinder: Dowe, Günter, 51588 Nümbrecht (DE)
(74) Vertreter: Stenger, Watzke & Ring Patentanwälte

(56) Entgegenhaltungen:
- WO-A-88/02703
- DE-A- 3 120 571
- DE-B- 1 159 788
- DE-C- 489 232
- DE-U- 9 416 947

## Beschreibung

Die Erfindung betrifft eine Zugeinrichtung für Fahrzeuganhänger mit einer Auflaufbremseinrichtung, die bei einer Relativbewegung zwischen einer mit der Kupplung für ein Zugfahrzeug verbundenen Zugstange und einer mit dem Anhängerfahrzeug verbundenen Zugdeichsel mittels einer Übertragungseinrichtung auf ein Bremsgestänge wirkt, wobei die Übertragungseinrichtung durch ein biegsames Zugelement gebildet ist, dessen vorderes Ende mit der Zugstange und dessen hinteres Ende mit dem Bremsgestänge verbunden ist und das über mindestens eine Umlenkrolle geführt ist, deren Umlenkpunkt für das biegsame Zugelement in Fahrtrichtung vor dem Befestigungspunkt des vorderen Endes des Zugelements an der Zugstange liegt.

Eine Zugeinrichtung mit diesen Merkmalen ist aus der DE-C 489 232 bekannt. Die Zugeinrichtung ermöglicht mit geringem technischen Aufwand eine Übertragung der durch die Auflaufbremseinrichtung erzeugten Relativbewegung zwischen Zugstange und Zugdeichsel auf das Bremsgestänge. Von Nachteil ist die fehlende Anpaßbarkeit der wirksamen Höhe der Kupplung an die jeweilige Höhe der korrespondierenden Kupplungselemente des Zugfahrzeuges.

Eine Zugeinrichtung mit höhenverstellbarer Deichsel ist aus der DE 31 20 571 A1 bekannt. Zur Realisierung der Höhenverstellbarkeit befindet sich zwischen der Zugstange und der Zugdeichsel ein Verbindungsteil, welches über eine erste Schwenkachse mit dem höhenverstellbaren und über eine zweite Schwenkachse mit dem festen Teil der Zugdeichsel verbunden ist. Die beim Bremsvorgang auftretende Auflaufkraft wird mittels eines Bowdenzuges auf ein Bremsgestänge übertragen. Der Bowdenzug stützt sich mit seiner Hülle an dem höhenverstellbaren Teil der Zugdeichsel ab, während die Seele des Bowdenzuges über einen zwischengeschalteten Hebel mit der axial beweglichen Zugstange verbunden ist. Diese Art der Kraftübertragung der Bremskraft arbeitet zwar weitgehend positionsfrei, d. h. unabhängig von der jeweiligen Höhenlage der Zugdeichsel, nachteilig ist jedoch der relativ hohe Kraftaufwand als Folge der inneren Reibung in dem in Gestalt eines Bogens um ca. 180° umgelenkten Bowdenzug.

Der Erfindung liegt die **Aufgabe** zugrunde, eine für höhenverstellbare Zugeinrichtungen geeignete, konstruktiv einfache Zugeinrichtung für Fahrzeuganhänger zu schaffen, deren Übertragungseinrichtung zwischen der Auflaufbremseinrichtung und dem Bremsgestänge einen möglichst hohen Wirkungsgrad mit geringen Verlusten hat.

Die **Lösung** dieser Aufgabenstellung durch die Erfindung ist dadurch gekennzeichnet, daß die Zugstange mittels mindestens eines Verbindungsteils mit mindestens zwei Schwenkachsen höhenverstellbar mit der Zugdeichsel verbunden ist, und daß an jeder Schwenkachse eine Umlenkrolle für das biegsame Zugelement gelagert ist.

Mit diesem erfindungsgemäßen Vorschlag wird eine für Fahrzeuganhänger bestimmte Zugeinrichtung geschaffen, die höhenverstellbar ist und bei der die Kraftübertragung von der Auflaufbremseinrichtung auf das Bremsgestänge auf besonders einfache Weise und mit geringst möglichen Reibungsverlusten erfolgt. Bei dem hierfür verwendeten biegsamen Zugelement kann es sich um ein Seil, eine Kette, oder ein Band aus Metall oder Kunststoff handeln, das nur geringe Abmessungen aufweist, da mit diesem biegsamen Zugelement ausschließlich Zugkräfte übertragen werden müssen.

Durch die Anordnung jeweils einer Umlenkrolle an jeder Schwenkachse des Verbindungsteils wird sichergestellt, daß sich auch bei einer Höhenverstellung der Zugeinrichtung keine Längenänderung hinsichtlich des biegsamen Zugelementes ergibt, so daß dieses unabhängig von der Höhenlage der an das Zugfahrzeug anzuschließenden Kupplung die in der Auflaufbremseinrichtung entstehenden Kräfte auf das Bremsgestänge überträgt.

Das hintere Ende des biegsamen Zugelements kann unmittelbar mit dem vorderen Ende des Bremsgestänges verbunden sein. Gemäß einem weiteren Merkmal der Erfindung ist es jedoch, insbesondere zur Erzielung einer Kraftübersetzung, möglich, das hintere Ende des biegsamen Zugelements mit einem Umlenkhebel zu verbinden, der seinerseits verschwenkbar an der Zugdeichsel oder am Rahmen des Anhängerfahrzeuges gelagert und mit dem Bremsgestänge verbunden ist.

Auf der Zeichnung sind zwei Ausführungsbeispiele der erfindungsgemäßen Zugeinrichtung dargestellt, und zwar zeigen:
- Fig. 1a: eine schematische Seitenansicht einer höhenverstellbaren Zugeinrichtung im Ausgangszustand,
- Fig. 1b: eine der Fig. 1a entsprechende Seitenansicht nach Betätigung der Auflaufbremseinrichtung,
- Fig. 2a: eine schematische Seitenansicht einer zweiten Ausführungsform der Zugeinrichtung im Ausgangszustand und
- Fig. 2b: eine der Fig. 2a entsprechende Seitenansicht nach Betätigung der Auflaufbremseinrichtung.

Bei beiden Ausführungsbeispielen umfaßt die Zugeinrichtung eine Zugdeichsel 1, die mit dem Rahmen eines strichpunktiert angedeuteten Anhängerfahrzeugs 2 fest verbunden ist. Am vorderen Ende der Zugdeichsel 1 ist über ein Verbindungsteil 3 ein höhenverstellbares Teil 4 angeordnet, das eine Auflaufbremseinrichtung trägt. Diese umfaßt ein Gehäuse 5, in dem eine Zugstange 6 entgegen der Kraft eines zwischengeschalteten Stoßdämpfers 7 längsbeweglich geführt ist. Die Zugstange 6 ist an ihrem vorderen, auf der Zeichnung nicht dargestellten Ende mit einer Kupplung für ein Zugfahrzeug versehen.

Bei einem Abbremsen des Zugfahrzeuges wird aufgrund der Trägheit des Anhängerfahrzeuges 2 das mit dem höhenverstellbaren Teil 4 der Zugdeichsel 1 verbundenen Gehäuse 5 der Auflaufbremseinrichtung relativ zur Zugstange 6 nach vorn verschoben, wobei diese Relativbewegung durch den Stoßdämpfer 7 gedämpft wird. Die Relativbewegung zwischen der mit der Kupplung für ein Zugfahrzeug verbundenen Zugstange 6 und dem mit dem Anhängerfahrzeug 2 verbundenen höhenverstellbaren Teil 4 der Zugdeichsel 1 wird zur Betätigung eines Bremsgestänges 8 benutzt, das bei beiden Ausführungsbeispielen eine Zugkraft auf eine auf der Zeichnung nicht dargestellte Bremseinrichtung des Anhängerfahrzeuges 2 ausübt.

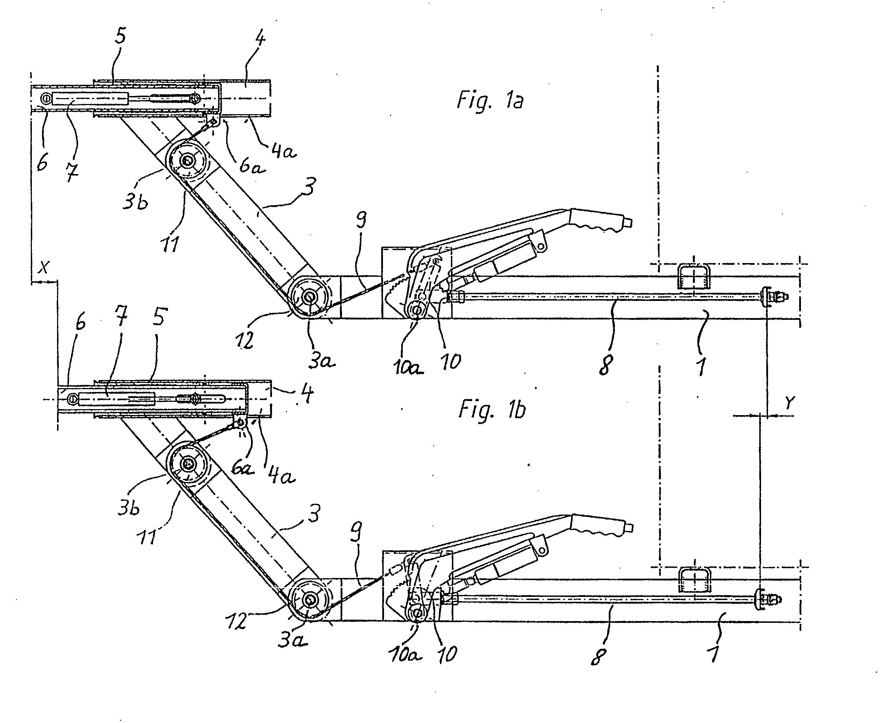

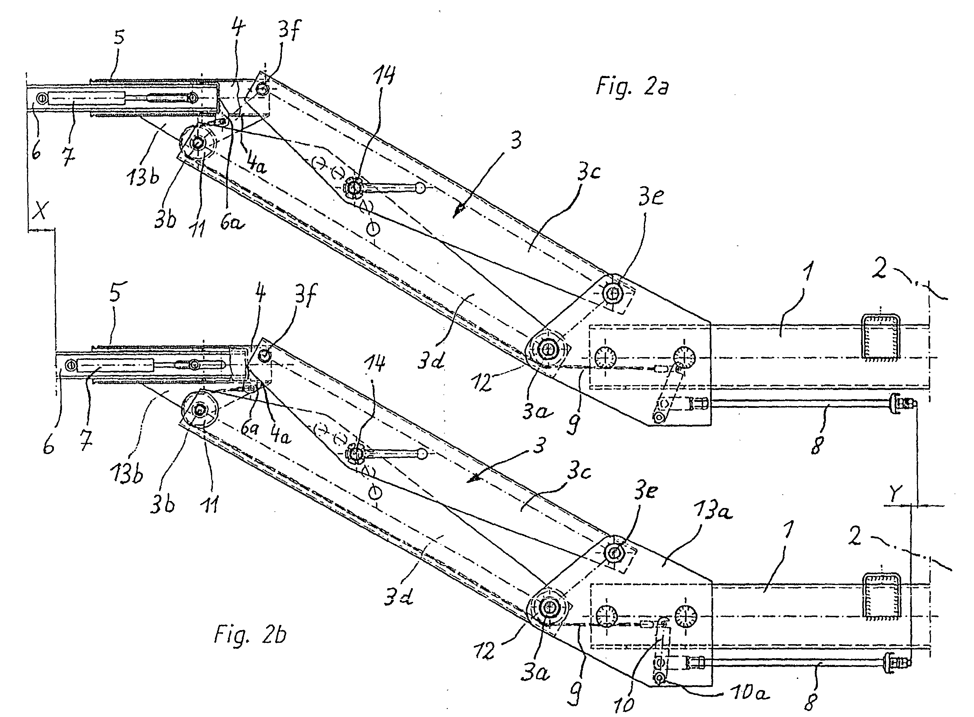

Der sich durch einen Vergleich der Fig. 1a und 1b bzw. 2a und 2b ergebende Weg X bei Betätigen der Auflaufbremseinrichtung wird mittels einer Übertragungseinrichtung auf das Bremsgestänge 8 übertragen, das gemäß den Darstellungen in den Fig. 1a und 1b bzw. 2a und 2b einen Verstellweg y ausführt, der zur Betätigung der Bremseinrichtung herangezogen wird.

Die Übertragungseinrichtung wird durch ein biegsames Zugelement 9 gebildet, dessen vorderes Ende über eine Lasche 6a mit dem hinteren Ende der Zugstange 6 verbunden ist. Diese Lasche 6a ragt bei beiden Ausführungsbeispielen durch einen Schlitz 4a an der Unterseite des höhenverstellbaren Teiles 4 heraus. Das hintere Ende des biegsamen Zugelements 9 ist mit dem Bremsgestänge 8 verbunden. Bei beiden Ausführungsbeispielen erfolgt diese Verbindung mit Hilfe eines der Kraft- und Wegübersetzung dienenden Umlenkhebels 10, der an seinem unteren Ende mittels eines Lagerbolzens 10a an der Zugdeichsel 1 bzw. einem Anbauteil an dieser Zugdeichsel 1 verschwenkbar gelagert ist. Bei beiden Ausführungsbeispielen greift das hintere Ende des biegsamen Zugelements 9 am oberen Ende dieses Umlenkhebels 10 an, wogegen das Bremsgestänge 8 im Bereich zwischen dem Lagerbolzen 10a und dem Angriff des biegsamen Zugelements 9 mit dem Umlenkhebel 10 verbunden ist.

Wie beide Ausführungsbeispiele weiterhin erkennen lassen, ist das biegsame Zugelement über mindestens eine Umlenkrolle 11 geführt, deren Umlenkpunkt für das biegsame Zugelement 9 in Fahrtrichtung vor dem Befestigungspunkt des vorderen Endes des Zugelements 9 an der Zugstange 6 liegt. Eine in den Zeichnungen nach rechts gerichtete Bewegung der Zugstange 6 hat demzufolge aufgrund der Umlenkung des biegsamen Zugelements 9 durch die Umlenkrolle 11 eine Zugbewegung des biegsamen Zugelements 9 und damit eine Verschwenkbewegung des Umlenkhebels 10 entgegen dem Uhrzeigersinn zur Folge.

Beim ersten Ausführungsbeispiel gemäß den Fig. 1a und 1b ist das zwischen Zugdeichsel 1 und höhenverstellbarem Teil 4 der Zugdeichsel 1 angeordnete Verbindungsteil 3 um zwei Schwenkachsen 3a und 3b verschwenkbar an der Zugdeichsel 1 bzw. am höhenverstellbaren Teil 4 angeordnet. Um bei einer Höhenverstellung des Teiles 4 eine Längenveränderung des biegsamen Zugelements 9 zu vermeiden, ist die Umlenkrolle 10 auf der oberen Schwenkachse 3a und eine weitere Umlenkrolle 12 auf der unteren Schwenkachse 3b angeordnet. Da sich die Abstände der Schwenkachsen 3a und 3b bei einer Höhenverstellung des Teiles 4 nicht verändern, ergibt sich bei einer derartigen Höhenverstellung kein schädlicher Einfluß auf das biegsame Zugelement 9.

Bei dem zweiten Ausführungsbeispiel nach den Fig. 2a und 2b besteht das Verbindungsteil 3 aus zwei im Querschnitt U-förmigen Streben, die mit gegeneinander weisenden Schenkeln angeordnet sind. Die Strebe 3d ist mittels der bereits erwähnten Schwenkachsen 3a und 3b jeweils über ein Zwischenglied 13a bzw. 13b an der Zugdeichsel 1 bzw. am höhenverstellbaren Teil 4 schwenkbar angelenkt. Die mit dieser Strebe 3d ein Parallelogramm bildende Strebe 3c ist mit den Zwischengliedern 13a bzw. 13b durch Schwenkachsen 3e und 3f verbunden. Bei einer Höhenverstellung des Teiles 4 erfolgt somit eine parallele Verschwenkung der Streben 3c und 3d. Die jeweils gewählte Höhenstellung kann durch ein Verriegelungsteil 14 arretiert werden, das beispielsweise in der Art eines Steckbolzens in ein Loch einer Lochreihe eingreift, die beispielsweise in den innenliegenden Schenkeln der einen Strebe ausgebildet ist, wogegen die Schenkel der anderen Strebe mit einer Aufnahmebohrung für den Steckbolzen des Verriegelungsteils 14 versehen sind.

Auch bei der zweiten Ausführungsform gemäß den Fig. 2a und 2b ist auf der Schwenkachse 3a eine zusätzliche Umlenkrolle 12 drehbar gelagert, über die das biegsame Zugelement 9 geführt ist. Dieses biegsame Zugelement 9 kann ein Seil, eine Kette, ein Riemen oder ein Band aus Metall oder Kunststoff sein, das nur geringe Querschnittsabmessungen aufweist, da es ausschließlich Zugkräfte zu übertragen hat.

### Bezugszeichenliste:

- 1: Zugdeichsel
- 2: Anhängerfahrzeug
- 3: Verbindungsteil
- 3a: Schwenkachse
- 3b: Schwenkachse
- 3c: Strebe
- 3d: Strebe
- 3e: Schwenkachse
- 3f: Schwenkachse
- 4: höhenverstellbares Teil
- 4a: Schlitz
- 5: Gehäuse
- 6: Zugstange
- 6a: Lasche
- 7: Stoßdämpfer
- 8: Bremsgestänge
- 9: biegsames Zugelement
- 10: Umlenkhebel
- 10a: Lagerbolzen
- 11: Umlenkrolle
- 12: Umlenkrolle
- 13a: Zwischenglied
- 13b: Zwischenglied
- 14: Verriegelungsteil

## Patentansprüche

1. Zugeinrichtung für Fahrzeuganhänger mit einer Auflaufbremseinrichtung, die bei einer Relativbewegung zwischen einer mit der Kupplung für ein Zugfahrzeug verbundenen Zugstange (6) und einer mit dem Anhängerfahrzeug verbundenen Zugdeichsel (1) mittels einer Übertragungseinrichtung auf ein Bremsgestänge (8) wirkt, wobei die Übertragungseinrichtung durch ein biegsames Zugelement (9) gebildet ist, dessen vorderes Ende mit der Zugstange (6) und dessen hinteres Ende mit dem Bremsgestänge (8) verbunden ist und das über mindestens eine Umlenkrolle (11) geführt ist, deren Umlenkpunkt für das biegsame Zugelement (9) in Fahrtrichtung vor dem Befestigungspunkt des vorderen Endes des Zugelements (9) an der Zugstange (6) liegt,
**dadurch gekennzeichnet,**
**daß** die Zugstange (6) mittels mindestens eines Verbindungsteils (3) mit mindestens zwei Schwenkachsen (3b, 3a) höhenverstellbar mit der Zugdeichsel verbunden ist, und daß an jeder Schwenkachse (3b, 3a) eine Umlenkrolle (11,12) für das biegsame Zugelement (9) gelagert ist.

2. Zugeinrichtung nach Anspruch 1, **dadurch gekennzeichnet, daß** das hintere Ende des biegsamen Zugelements (9) mit einem Umlenkhebel (10) verbunden ist, der seinerseits verschwenkbar an der Zugdeichsel (1) oder am Rahmen des Anhängerfahrzeugs (2) gelagert und mit dem Bremsgestänge (8) verbunden ist.

## Claims

1. Pulling device for vehicle trailers, with an overrun braking device which acts on a brake linkage (8) by means of a transmission device in the event of a relative movement between a pull rod (6) connected to the coupling for a traction vehicle and a drawbar (1) connected to the trailer vehicle, the transmission device being formed by a flexible pull element (9), the front end of which is connected to the pull rod (6) and the rear end of which is connected to the brake linkage (8) and which is guided over at least one deflecting roller (11), of which the deflection point for the flexible pull element (9) is located, in the direction of travel, in front of the fastening point of the front end of the pull element (9) on the pull rod (6), **characterized in that** the pull rod (6) is connected to the drawbar vertically adjustably by means of at least one connecting part (3) having at least two pivot axes (3b, 3a), and in that a deflecting roller (11, 12) for the flexible pull element (9) is mounted on each pivot axis (3b, 3a).

2. Pulling device according to Claim 1, **characterized in that** the rear end of the flexible pull element (9) is connected to a deflecting lever (10) which is itself mounted pivotably on the drawbar (1) or on the frame of the trailer vehicle (2) and is connected to the brake linkage (8).

## Revendications

1. Dispositif de traction pour remorque de véhicule qui comprend un système de freinage à inertie qui agit, lors d'un déplacement relatif entre une tige de traction (6) reliée à l'accouplement pour un véhicule tracteur et un timon de traction (1) relié à la remorque, sur une tringlerie de freinage (8) au moyen d'un dispositif de transmission, ledit dispositif de transmission étant formé par un élément de traction flexible (9) dont l'extrémité antérieure est reliée à la tige de traction (6) et dont l'extrémité postérieure est reliée à la tringlerie de freinage (8) et qui est guidé par au moins un galet de renvoi (11), dont le point de renvoi pour l'élément de traction flexible (9) est disposé, considéré en direction de déplacement, en avant du point de fixation de l'extrémité antérieure de l'élément de traction (9) sur la tige de traction (6),
**caractérisé en ce que** la tige de traction (6) est reliée au timon de traction avec faculté de réglage en hauteur à l'aide d'au moins une partie de liaison (3) avec au moins deux axes de pivotement (3b, 3a), et en ce qu'au niveau de chaque axe de pivotement (3b, 3a) est monté un galet de renvoi (11, 12) pour l'élément de traction souple (9).

2. Dispositif de traction selon la revendication 1, **caractérisé en ce que** l'extrémité postérieure de l'élément de traction flexible (9) est reliée à un levier de renvoi (10), celui-ci étant de son côté monté en pivotement sur le timon de traction (1) ou sur le châssis de la remorque (2) et étant relié à la tringlerie de freinage (8).
